# FASCICULE DE BREVET EUROPEEN

(11) **EP 0 589 792 B1**
(45) Date de publication et mention de la délivrance du brevet: **07.05.1997**
(21) Numéro de dépôt: 93402326.8
(22) Date de dépôt: 23.09.1993
(51) Int. Cl.: B23P 19/02

(54) **Dispositif de manutention de faisceaux tubulaires pour échangeurs thermiques**
Handhabungseinrichtung für Rohrbündel von Wärmetauschern
Tube bundle handling apparatus for heat exchangers

(30) Priorité: 24.09.1992 FR 9211401
(43) Date de publication de la demande: 30.03.1994
(73) Titulaire: ETABLISSEMENTS PONTICELLI FRERES, 75013 Paris (FR)
(72) Inventeur: Lagarde, Jean-Paul, F-93220 Gagny (FR); Godbillon, Pierre, F-77820 Le Chatelet en Brie (FR)
(74) Mandataire: Dronne, Guy

(56) Documents cités:
- EP-A- 0 053 757
- EP-A- 0 555 571
- US-A- 3 935 951
- US-A- 4 666 365

## Description

La présente invention concerne un dispositif de manutention de faisceaux tubulaires d'échangeurs thermiques permettant en outre leur extraction de la calandre de l'échangeur.

De nombreuses installations industrielles sont équipées d'échangeurs thermiques tubulaires constitués par une enveloppe externe ou calandre fixe dans laquelle est monté un faisceau de tubes d'échange thermique fixés à au moins une de leurs extrémités à une plaque à tube. Le faisceau de tubes avec sa plaque se présente donc comme une structure globalement cylindrique. Lors des opérations de maintenance de l'installation industrielle, il est nécessaire de procéder à l'extraction des faisceaux de tubes hors de la calandre pour apporter ceux-ci dans une zone de vérification et de nettoyage.

Cependant, ces faisceaux de tubes peuvent être très encombrants ; typiquement ils peuvent atteindre un diamètre de 1,7 mètres et une longueur de 9 mètres et leur masse peut être très élevée puisqu'elle peut atteindre 20 tonnes.

En outre, ces faisceaux de tubes qui sont toujours à axe horizontal peuvent être disposés dans l'installation, telle qu'une raffinerie ou une usine chimique, à des niveaux sensiblement différents, le plus souvent à une hauteur au plus égale à environ 7 mètres. Il est également important de souligner qu'une même installation industrielle peut comporter un grand nombre d'échangeurs thermiques à tubes présentant des dimensions variées et disposés à des endroits différents de l'installation industrielle.

Pour procéder à ces opérations d'extraction et de manutention des faisceaux de tubes, on a proposé d'utiliser des ensembles d'extraction qui sont suspendus à l'extrémité de moyens de levage de type classique tels que des ponts roulants ou des grues. Une telle solution est mal adaptée au problème à résoudre dans la mesure où les opérations sont alors longues, nécessitent une main d'oeuvre importante et sont donc d'un coût élevé.

On a également proposé certains dispositifs spécialement prévus pour procéder à la manutention et à l'extraction des faisceaux de tubes mais ces dispositifs sont mal adaptés aux problèmes à résoudre et conviennent mal aux différentes situations dans lesquelles les faisceaux tubulaires doivent être extraits.

Le document US 4.666.365 décrit une machine de manutention de faisceaux tubulaires montés sur un véhicule mais qui est mal adaptée à l'extraction de faisceaux de poids élevés et au déchargement du faisceau après son extraction.

Un objet de la présente invention est de fournir un dispositif de manutention de faisceaux tubulaires d'échangeurs thermiques qui remédie aux inconvénients mentionnés ci-dessus, en particulier en permettant une extraction rapide des faisceaux tubulaires de dimensions variables et installés à des niveaux très différents.

Pour atteindre ce but, selon l'invention, le dispositif de manutention de faisceaux tubulaires d'échangeurs thermiques comprend :
une plate-forme mobile (12) montée sur roue ;
une colonne télescopique verticale (30) comprenant au moins deux éléments de colonne (32, 34);
des moyens (70) pour provoquer le déplacement relatif vertical du ou des éléments télescopiques par rapport à l'élément inférieur (32) et un ensemble d'extraction (52) comportant un élément formant poutre (100), caractérisé en ce qu'il comprend en outre :
un ensemble de mise en rotation (38) autour de l'axe vertical (XX') de ladite colonne comportant une première partie (40) solidaire en rotation par rapport à l'élément supérieur (36) de la colonne et une deuxième partie mobile (42) en rotation par rapport à la première partie (40) autour dudit axe vertical ; et
un bras de supportage (48) dont une première extrémité est solidaire d'une deuxième partie de l'ensemble de mise en rotation, ledit bras étant sensiblement horizontal ; et en ce que ledit élément formant poutre est relié à la deuxième extrémité du bras de supportage (48), ledit ensemble formant poutre étant sensiblement horizontal et sensiblement orthogonal audit bras, des moyens (110) d'accrochage du faisceau guidés par ladite poutre et disposé en-dessous de celle-ci et des moyens de sustentation (136, 138) dudit faisceau après son extraction disposés sensiblement à au moins une extrémité de ladite poutre en-dessous de celle-ci.

On comprend que l'ensemble qui vient d'être décrit est particulièrement bien adapté à l'extraction de faisceaux tubulaires disposés dans des positions très différentes. D'une part, l'ensemble est monté sur un dispositif mobile qui permet un positionnement aisé par rapport aux faisceaux à extraire et ultérieurement, éventuellement, le déplacement vers la zone de contrôle des faisceaux. En outre, du fait que le faisceau une fois extrait est supporté en-dessous de l'élément formant poutre, il est possible de saisir un faisceau de tubes à une hauteur réduite et par ailleurs il est aisé de déposer le faisceau extrait sur un véhicule spécialisé de transport.

Enfin, il faut observer que la commande de rotation de l'ensemble d'extraction étant disposée à l'extrémité supérieure de la colonne télescopique, on obtient une bien meilleure précision du positionnement angulaire des moyens d'extraction sans compliquer l'ensemble du dispositif.

De préférence, la plate-forme mobile est un véhicule automobile.

De préférence également, le bras de supportage de l'ensemble d'extraction est à longueur commandable et comporte des moyens pour commander les variations de sa longueur.

Cette caractéristique est particulièrement intéressante car elle permet d'adapter la position de l'ensemble d'extraction par rapport à la position de la colonne verticale télescopique sans avoir à déplacer le véhicule.

Selon encore une autre caractéristique préférée de l'invention, la première partie de l'ensemble de mise en rotation est reliée à l'extrémité inférieure de l'élément supérieur de colonne par des moyens de déplacement verticaux pour déplacer cette première partie sur au moins une portion de la longueur dudit élément supérieur de la colonne.

On comprend qu'ainsi on peut profiter de la totalité de la hauteur de la colonne pour prélever un faisceau de tubes à une hauteur importante et qu'en revanche on peut, en mettant la première partie de l'ensemble de mise en rotation dans sa position la plus basse par rapport à l'élément supérieur de colonne, saisir un faisceau tubulaire disposé à une hauteur très réduite par rapport au sol.

D'autres caractéristiques et avantages de la présente invention apparaîtront mieux à la lecture de la description qui suit d'un mode de réalisation de l'invention donné à titre d'exemple non limitatif. La description se réfère aux figures annexées sur lesquelles :
- la figure 1 est une vue générale simplifiée de l'ensemble du dispositif de manutention ;
- la figure 2 est une vue en coupe verticale de la colonne télescopique ;
- la figure 3 est une vue partielle en perspective d'une partie de la colonne télescopique montrant le guidage mutuel des éléments de la colonne ;
- la figure 4 est une vue partielle de dessus montrant l'ensemble de mise en rotation de l'ensemble d'extraction ;
- la figure 5 est une vue en perspective de l'ensemble d'extraction ; et
- les figures 6 et 7 sont des vues respectivement en élévation et de dessus de l'ensemble du dispositif de manutention en position de repos.

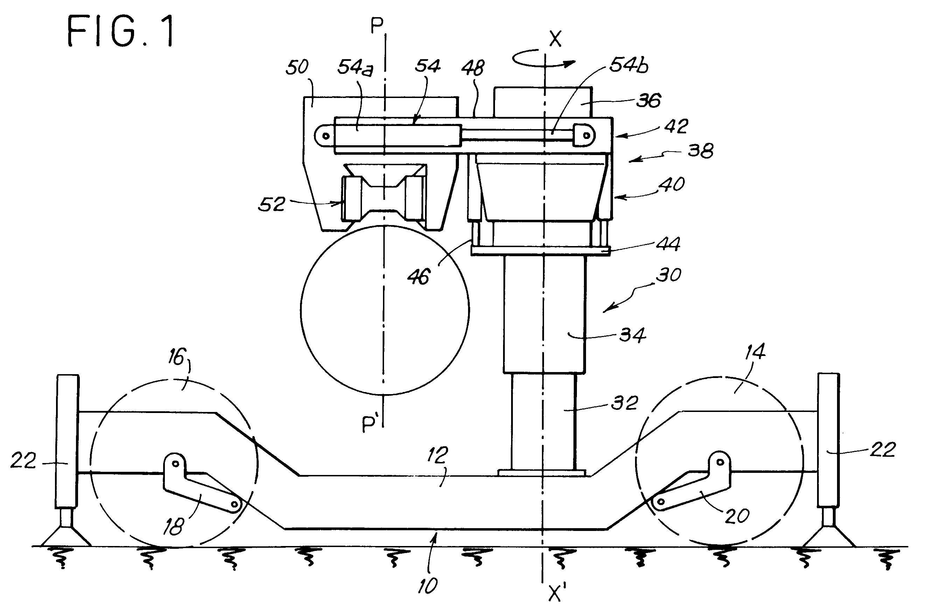

En se référant tout d'abord à la figure 1, on va décrire l'ensemble du dispositif de manutention de faisceaux tubulaires. Le dispositif comporte d'abord un châssis mobile 10 constitué par une plate-forme 12 munie, dans l'exemple considéré, de deux trains de roues 14 et 16. De préférence, les axes des trains de roues sont montés à l'extrémité de paires de leviers, respectivement référencés 18 et 20, qui sont montés pivotants par rapport à la plate-forme 12. En position de déplacement de la plate-forme 10, les leviers sont non escamotés pour donner aux trains de roues leur position normale par rapport au châssis du véhicule. En position de travail, les leviers 18 et 20 sont escamotés pour ramener la plate-forme en position basse. C'est ce qui est représenté sur la figure 1. Bien entendu, en position de travail, des patins mobiles de stabilisation tels que 22 sont actionnés pour assurer une grande stabilité à la plate-forme 12, selon toutes les directions.

Sur la plate-forme 12 est montée une colonne verticale télescopique 30 d'axe vertical XX'. La colonne télescopique est constituée, dans l'exemple considéré, par trois éléments de colonne référencés 32, 34 et 36. L'élément inférieur 32 est fixé rigidement sur la plate-forme 12 et l'élément 34 peut coulisser verticalement par rapport à l'élément inférieur 32 tout en étant immobilisé en rotation par rapport à celui-ci. De même, l'élément supérieur 36 peut coulisser par rapport à l'élément 34 tout en étant immobilisé en rotation par rapport à ce dernier. De préférence, les éléments 32 à 36 ont une section droite horizontale qui a sensiblement la forme d'un carré. Sur l'élément supérieur de colonne 36 est monté un dispositif de mise en rotation, portant la référence générale 38. Ce dispositif de mise en rotation comporte une première partie 40 qui est solidaire en rotation de l'élément supérieur 36 de la colonne et une deuxième partie 42 qui peut pivoter par rapport à la partie 40 autour de l'axe XX'. De préférence, l'ensemble de mise en rotation 38 peut être déplacé verticalement selon la direction XX' par rapport à l'élément supérieur de colonne 36. Pour cela, une plate-forme horizontale 44 est solidaire de l'extrémité inférieure de la colonne 36 et la première partie 40 de l'ensemble de mise en rotation 38 est supportée par la plate-forme 44 par l'intermédiaire de vérins verticaux tels que 46. En commandant les vérins 46, on peut déplacer l'ensemble de mise en rotation 38 sur toute la longueur de l'élément supérieur de colonne 36. A partir de la partie mobile 42 de l'ensemble de mise en rotation s'étend un bras radial 48 à l'extrémité duquel est monté un ensemble de liaison 50 sur lequel est monté l'ensemble d'extraction 52 qui sera décrit ultérieurement.

Comme on le voit sur la figure 1, l'ensemble de liaison 50 peut se déplacer par coulissement par rapport au bras 48 selon la direction de la longueur de celui-ci. Ces déplacements sont par exemple commandés par un vérin 54 dont le corps 54a est solidaire de la pièce 50 et dont la tige 54b est solidaire du bras 48.

On comprend qu'ainsi on peut adapter la distance entre l'axe XX' de la colonne 30 et le plan vertical médian PP' de l'ensemble d'extraction 52. Il en résulte qu'il est possible d'ajuster la position de l'ensemble d'extraction par rapport au faisceau tubulaire à extraire pour une position déterminée de la plate-forme 12. Cette solution est particulièrement intéressante puisqu'elle permet d'éviter d'avoir dans un premier temps à faire une manoeuvre à vide avec la machine pour positionner correctement ultérieurement le châssis du véhicule 12 par rapport au faisceau à extraire à la suite de la première manoeuvre.

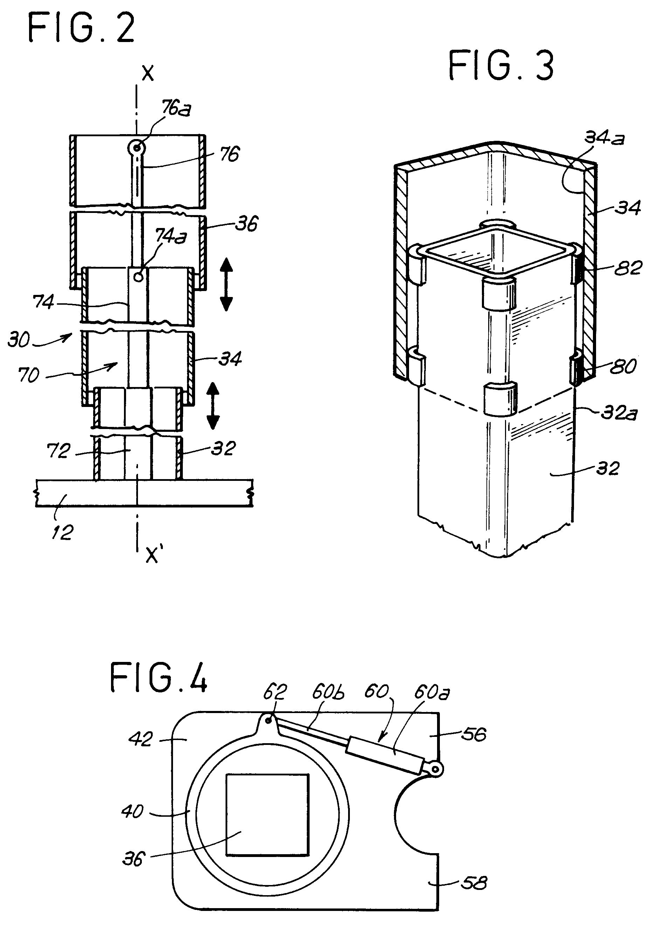

La figure 4 montre un exemple de réalisation de l'ensemble de mise en rotation. Sur cette figure, on a représenté d'une part la première partie 40 qui est solidaire en rotation de l'élément supérieur de la colonne 36 mais mobile en translation verticale par rapport à celui-ci et d'autre part la partie mobile en rotation 42. Il comporte des extensions telles que 56 et 58. Un vérin 60 permet la mise en rotation relative de ces deux pièces. Le corps de vérin 60a est solidaire d'une extension 56 de la partie 42 tandis que l'extrémité de la tige 60b du vérin est articulée sur une oreille 62 de la partie 40 immobile en rotation. On obtient ainsi une possibilité de mise en rotation de 100 degrés dans un sens et dans l'autre obtenue par actionnement du vérin.

Il va de soi que l'on pourrait utiliser d'autres moyens de mise en rotation tels que des pignons, des roues dentées, etc.

En se référant maintenant à la figure 2, on va décrire plus en détails la commande de l'extension ou du retrait de la colonne télescopique 30. Les éléments de colonne 32, 34 et 36 sont de préférence à section droite sensiblement carrée. L'ensemble des déplacements relatifs des éléments de colonne 34, 36 par rapport à l'élément inférieur fixe 32 est commandé par un double vérin 70 disposé selon l'axe XX' de la colonne 30 à l'intérieur des éléments de colonne. Le vérin 70 comporte un corps 72 fixe disposé à l'intérieur de l'élément également fixe 32. Le vérin comporte une première tige 74 disposée à l'intérieur du deuxième élément de colonne et dont l'extrémité 74a est solidaire de l'extrémité supérieure de l'élément de colonne 34. Cette première tige 74 constitue en même temps un corps pour la deuxième tige 76 de ce vérin. La tige 76 est disposée à l'intérieur de l'élément supérieur 36 de la colonne et son extrémité 76a est solidaire de l'extrémité supérieure de l'élément supérieur de colonne 36. Pour optimiser le guidage des éléments mobiles 34 et 36 et la transmission des efforts, le vérin double 70 est commandé de telle manière que le recouvrement mutuel x entre le deuxième élément 34 et l'élément fixe 32 et le recouvrement mutuel x' entre le deuxième élément 34 et l'élément supérieur 36 soient en permanence égaux quelle que soit la longueur totale de la colonne. Cela est bien sûr obtenu en commandant les corps de vérin 72 et 74 de telle manière que les déplacements de la tige 74 soient de même longueur que les déplacements de la tige 76 du vérin par rapport au corps 74.

Il va de soi que, si dans l'exemple décrit la colonne 30 est constituée par trois éléments de colonne, celle-ci pourrait n'en comporter que deux ou au contraire en comporter plus de trois.

La figure 3 montre un mode préféré de guidage mutuel des éléments de colonne permettant d'assurer une transmission optimale des efforts appliqués aux différents éléments de la colonne lors des opérations d'extraction d'un faisceau. Sur la figure 3, on a représenté par exemple l'élément inférieur 32 de colonne qui est fixe et l'élément intermédiaire 34 de colonne. Le guidage mutuel est assuré par l'intermédiaire d'une première série de quatre patins portant la référence générale 80. Ces patins ont une forme coudée ; ils sont solidaires des arêtes de la face interne de l'élément 34. Ils sont fixés sur la face interne 34a de l'élément télescopique 34. Les patins 80 sont tous disposés dans un même plan horizontal et réalisés dans un matériau présentant une haute résistance mécanique mais un coefficient de frottement très réduit. De la même manière, un ensemble de quatre patins 82 est fixé sur chaque arête de la section carrée horizontale de l'élément de colonne 32. Ces patins sont fixés sur la face externe 32a de l'élément 32 à son extrémité supérieure. On comprend aisément que chaque patin 80 coopère avec les sommets arrondis respectivement de l'élément 32 et de l'élément 34. Il en va bien sûr de même des patins 82. On obtient ainsi une transmission des efforts d'un élément à l'autre dans des zones des éléments de colonne qui présentent une résistance très élevée, c'est-à-dire selon les arêtes de ces éléments. On évite ainsi d'éventuelles déformations qui pourraient se produire en utilisant une autre solution pour le guidage mutuel des éléments de colonne.

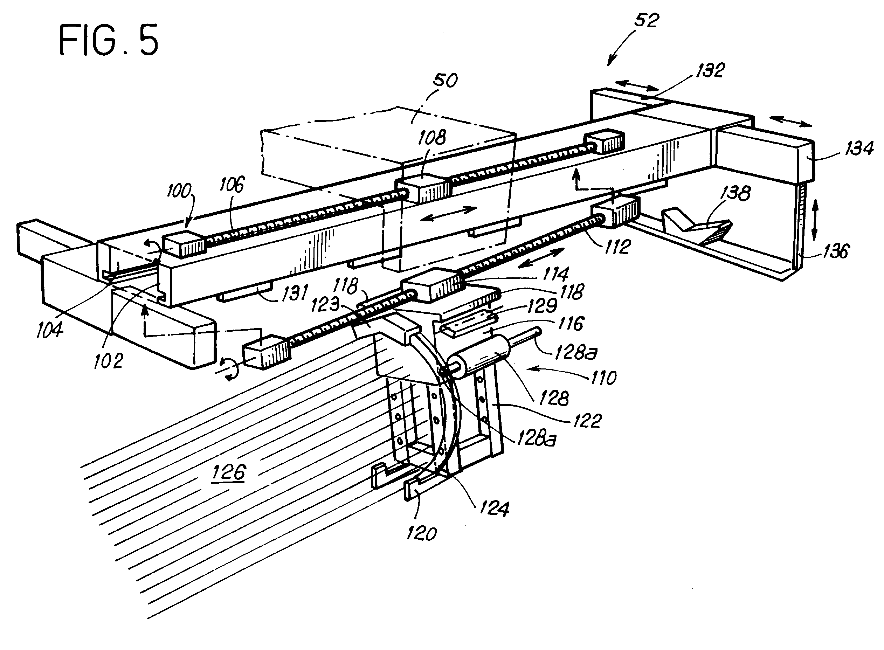

En se référant maintenant à la figure 5, on va décrire un mode préféré de réalisation de l'ensemble d'extraction des faisceaux tubulaires. Sur cette figure, on a représenté une partie de la pièce de liaison 50 qui supporte l'ensemble d'extraction 52 et qui est reliée à l'extrémité du bras 48. L'ensemble d'extraction est constitué par un ensemble formant poutre 100 consistant essentiellement en deux glissières 102 et 104 qui sont parallèles entre elles et disposées horizontalement, l'ensemble de la poutre 100 étant orthogonal à la direction du bras de supportage 48. Un système de vis sans fin 106 et d'écrou 108 à filets trapézoïdaux permet de commander le déplacement de la poutre 100 selon la direction de sa longueur par rapport à la pièce 50 et donc par rapport au bras 48.

Les glissières 102 et 104 servent à supporter un chariot d'extraction 110 et à guider celui-ci selon la longueur de la poutre 100. Les déplacements du chariot 110 le long des glissières 104 sont également commandés par une vis à filet trapézoïdal 112 montée entre les glissières 102 et 104 coopérant avec un écrou 114 solidaire de la partie supérieure 116 du chariot d'extraction 110. Sur la figure, le chariot et la vis sans fin ont été représentés sortis de la poutre 100 pour en rendre la compréhension plus aisée. La partie supérieure 116 du chariot comporte deux ailes référencées 118 qui coopèrent avec les glissières 102 et 104. L'élément d'extraction comporte des crochets inférieurs mobiles 120 qui sont solidaires d'une partie mobile 122 du chariot, cette partie pouvant se déplacer verticalement par rapport à la partie supérieure 116 de celui-ci. La partie supérieure 116 du chariot comporte également un crochet fixe 123. La coopération des crochets 120 et 123 avec la périphérie de la plaque à tube 124 d'un faisceau de tubes 126 permet, par la commande du déplacement du chariot par rapport à la poutre 100, de procéder à l'extraction progressive du faisceau 126 hors de sa calandre. Le chariot 110 est, en outre, équipé de deux vérins à double tiges 128 montés sur la partie supérieure 116 du chariot. Les extrémités 128a des tiges des vérins sont équipées de moyens d'accrochage sur la plaque à tubes du faisceau. Ces vérins sont utilisés pour la phase initiale d'extraction du faisceau lorsque celle-ci nécessite une force très élevée que ne peut développer la tige 112 qui commande les déplacements du chariot. Cela se présente lorsqu'il y a un fort calmatage du faisceau dans la calandre. Par exemple, les vérins peuvent produire une force d'extraction de l'ordre de 60 tonnes, alors que le chariot lui-même ne peut développer qu'une force de l'ordre de 20 tonnes.

Pour mettre en oeuvre cette possibilité, le chariot 110 est verrouillé sur ses glissières par la coopération de volets rabattables 129 montés sur la partie supérieure 116 du chariot et coopérant avec des ergots 131 solidaires des glissières lorsqu'ils sont en position relevée. La force d'extraction est alors développée uniquement par les vérins 128. Lorsque l'extraction initiale a été obtenue, les vérins sont désactivés et le chariot est déverrouillé par rapport aux glissières. La continuation de l'extraction est obtenue par le déplacement du chariot sous l'effet de la tige 112.

La poutre 100 est munie à chacune de ses extrémités de moyens de sustentation du faisceau de tubes après son extraction. Ces moyens de supportage sont constitués de préférence par deux demi-poutres 132 et 134 qui s'étendent perpendiculairement à la direction de la poutre 100 et dont la longueur extérieure à la poutre peut être réglée pour s'adapter aux différents diamètres de faisceaux tubulaires. Les extrémités des poutres 132 et 134 supportent des moyens par chaîne ou équivalent de longueur réglable 136 supportant elles-mêmes un palonnier 138 destiné à recevoir la face inférieure de la périphérie du faisceau de tubes. De préférence, la poutre 100 est équipée d'un tel système à chacune de ses extrémités pour pouvoir travailler selon les deux directions.

Il est important de souligner que, selon l'invention, le faisceau de tubes 126 est supporté par l'ensemble d'extraction et est suspendu en-dessous de l'ensemble d'extraction . En d'autres termes, en dehors des palonniers 138 qui peuvent aisément être escamotés, aucun élément mécanique ne vient gêner la dépose du faisceau de tubes extrait sur une plate-forme de transport autonome. Cette disposition permet donc de disposer aisément le faisceau de tubes extrait de sa calandre sur un véhicule de transport indépendant sans qu'il soit nécessaire de faire appel à des moyens de levage auxiliaires.

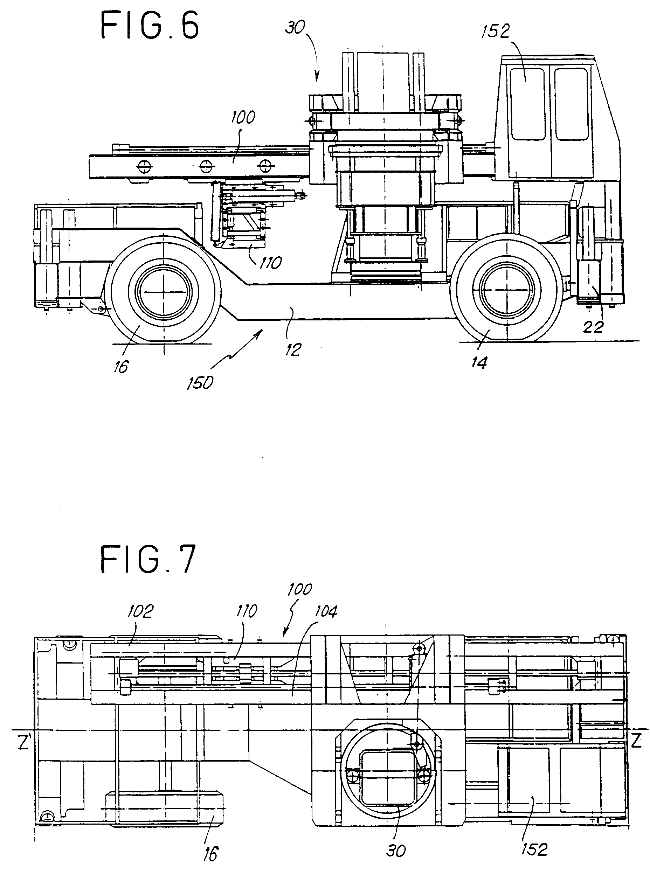

En se référant maintenant aux figures 6 et 7, on va décrire un autre mode préféré de réalisation de l'invention dans lequel la plate-forme 12 est le châssis d'un véhicule automobile 150.

La structure du dispositif de manutention est par ailleurs identique à celle qui a été décrite en liaison avec les figures 1 à 5.

La figure 7 montre que la cabine 152 du véhicule est disposé d'un côté de l'axe longitudinal ZZ' du véhicule de même que la base de la colonne télescopique 30. En revanche, la partie 100 avec son chariot d'extraction 110 est disposée au-dessus de la partie du véhicule située de l'autre côté de l'axe longitudinal ZZ'.

Sur la figure 6, le véhicule est représenté dans une position où ses trains de roues sont en position de déplacement.

Il faut enfin ajouter que, grâce à sa structure, l'ensemble d'extraction de faisceaux peut fonctionner à droite ou à gauche du châssis du véhicule ou encore en avant ou en arrière de celui-ci.

## Revendications

1. Dispositif de manutention de faisceaux tubulaires d'échangeurs thermiques du type comprenant :
une plate-forme mobile (12) montée sur roue ;
une colonne télescopique verticale (30) comprenant au moins deux éléments de colonne (32, 34);
des moyens (70) pour provoquer le déplacement relatif vertical du ou des éléments télescopiques par rapport à l'élément inférieur (32) et un ensemble d'extraction (52) comportant un élément formant poutre (100), caractérisé en ce qu'il comprend en outre :
un ensemble de mise en rotation (38) autour de l'axe vertical (XX') de ladite colonne comportant une première partie (40) solidaire en rotation par rapport à l'élément supérieur (36) de la colonne et une deuxième partie mobile (42) en rotation par rapport à la première partie (40) autour dudit axe vertical ; et
un bras de supportage (48) dont une première extrémité est solidaire d'une deuxième partie de l'ensemble de mise en rotation, ledit bras étant sensiblement horizontal ; et en ce que ledit élément formant poutre est relié à la deuxième extrémité du bras de supportage (48), ledit ensemble formant poutre étant sensiblement horizontal et sensiblement orthogonal audit bras, des moyens (110) d'accrochage du faisceau guidés par ladite poutre et disposé en-dessous de celle-ci et des moyens de sustentation (136, 138) dudit faisceau après son extraction disposés sensiblement à au moins une extrémité de ladite poutre en-dessous de celle-ci.

2. Dispositif de manutention selon la revendication 1, caractérisé en ce que ladite plate-forme mobile (12) est un véhicule automobile (150).

3. Dispositif de manutention selon l'une quelconque des revendications 1 et 2, caractérisé en ce que ledit bras de supportage (48) est à longueur commandable et comporte des moyens (54) pour commander les variations de sa longueur.

4. Dispositif de manutention selon l'une quelconque des revendications 1 à 3, caractérisé en ce que la première partie (40) de l'ensemble de rotation (38) est reliée à l'extrémité inférieure (44) de l'élément de colonne supérieur (36) par des moyens de déplacement verticaux (46) pour la déplacer sur au moins une partie de la longueur dudit élément de colonne.

5. Dispositif de manutention selon l'une quelconque des revendications 1 à 4, caractérisé en ce que chaque élément de colonne (32, 34, 36) a une section horizontale creuse rectangulaire et en ce que les moyens de guidage en translation d'un élément de colonne par rapport à l'élément voisin comprennent au moins quatre patins (82) disposés dans un même plan horizontal aux arêtes de la section horizontale de l'élément de colonne et sont solidaires d'un des éléments de colonne et coopèrent avec les arêtes de la section horizontale de l'élément de colonne (34) engagé à coulissement avec le premier élément (32).

6. Dispositif de manutention selon la revendication 5, caractérisé en ce que chaque élément de colonne (32, 34, 36) est muni à chacune de ses extrémités desdits quatre patins (80, 82), les patins des extrémités supérieures étant fixés à l'extérieur desdits éléments et les patins des extrémités inférieures étant fixés à l'intérieur desdits éléments de colonne.

7. Dispositif de manutention selon l'une quelconque des revendications 1 à 6, caractérisé en ce que les moyens de déplacement des éléments de colonne comprennent des moyens par vérin (70) disposés à l'intérieur de ceux-ci selon l'axe de ladite colonne.

8. Dispositif de manutention selon la revendication 7, caractérisé en ce que ladite colonne est constituée par trois éléments télescopiques (32, 34, 36) et en ce que les moyens par vérin comprennent un vérin (70) à double tige, le corps (72) dudit vérin étant solidaire de l'élément inférieur de colonne (32), chacune des tiges (74, 76) du vérin étant solidaire de l'extrémité supérieure d'un des deux autres éléments télescopiques (34, 36), ledit vérin (70) étant commandé de telle manière que les déplacements relatifs des deux tiges soient sensiblement égaux.

9. Dispositif de manutention selon la revendication 2, caractérisé en ce que ledit véhicule automobile (150) est muni de roues (14, 16) reliées au châssis (10) du véhicule par des leviers (18, 20) pouvant pivoter autour d'axes horizontaux, lesdits leviers pouvant prendre une première position dans laquelle le véhicule est en état de déplacement et une deuxième position dans laquelle le châssis (10) du véhicule est abaissé par rapport à son état de déplacement.

10. Dispositif de manutention selon l'une quelconque des revendications 1 à 9, caractérisé en ce que ledit ensemble formant poutre (100) comporte des glissières horizontales (102, 104) pour guider en translation lesdits moyens d'accrochage (110), lesdits moyens d'accrochage étant suspendus auxdites glissières, et des moyens (112,114) pour commander le déplacement des moyens d'accrochage le long des glissières.

11. Dispositif de manutention selon la revendication 10, caractérisé en ce que lesdits moyens d'accrochage comprennent un chariot (110) coopérant avec les glissières (102,104) portant des éléments d'accrochage (120,122) et entraîné en translation par les moyens (112,114) de commande de déplacement.

12. Dispositif de manutention selon la revendication 11, caractérisé en ce que ledit chariot (110) comprend, en outre, des moyens escamotables (129) de verrouillage sur lesdites glissières (102,104) et des moyens par vérin (128) munis de moyens auxiliaires d'accrochage (128a) pour provoquer l'extraction dudit faisceau de tubes, ledit chariot étant verrouillé sur lesdites glissières.

## Claims

1. Device for handling tube bundles of heat exchangers, of the type comprising:
a moving platform (12) mounted on wheels;
a vertical telescopic column (30) comprising at least two column elements (32, 34);
means (70) for bringing about relative vertical displacement of the telescopic element or elements with respect to the lower element (32) and an extraction assembly (52) including an element forming a beam (100), characterized in that it further comprises:
an assembly (38) for causing rotation about the vertical axis (XX') of the said column, this assembly including a first part (40) secured so that it cannot rotate with respect to the upper element (36) of the column and a second part (42) which can move in terms of rotation with respect to the first part (40) about the said vertical axis; and
a support arm (48), a first end of which is secured to a second part of the rotation assembly, the said arm being substantially horizontal; and in that the said element forming a beam is connected to the second end of the support arm (48), the said assembly forming a beam being substantially horizontal and substantially orthogonal to the said arm, means (110) for catching hold of the bundle which are guided by the said beam and arranged beneath it and means (136, 138) for supporting the said bundle after it has been extracted, these being arranged substantially at least at one end of the said beam and beneath the latter.

2. Handling device according to Claim 1, characterized in that the said moving platform (12) is a self-propelled vehicle (150).

3. Handling device according to either one of Claims 1 and 2, characterized in that the said support arm (48) is of controllable length and includes means (54) for controlling the variations in its length.

4. Handling device according to any one of Claims 1 to 3, characterized in that the first part (40) of the rotation assembly (38) is connected to the lower end (44) of the upper column element (36) by vertical displacement means (46) for displacing it along at least part of the length of the said column element.

5. Handling device according to any one of Claims 1 to 4, characterized in that each column element (32, 34, 36) has a hollow rectangular horizontal section and in that the means for guiding one column element in translation with respect to the neighbouring element comprise at least four pads (82) arranged in one and the same horizontal plane at the corners of the horizontal section of the column element and are secured to one of the column elements and interact with the corners of the horizontal section of the column element (34) in sliding engagement with the first element (32).

6. Handling device according to Claim 5, characterized in that each column element (32, 34, 36) is equipped with the said four pads (80, 82) at each of its ends, the upper-end pads being fixed on the outside of the said elements, and the lower-end pads being fixed inside the said column elements.

7. Handling device according to any one of Claims 1 to 6, characterized in that the means of displacing the column elements comprise ram means (70) arranged inside these elements along the axis of the said column.

8. Handling device according to Claim 7, characterized in that the said column consists of three telescopic elements (32, 34, 36) and in that the ram means comprise a ram (70) with two rods, the body (72) of the said ram being secured to the lower column element (32) and each of the rods (74, 76) of the ram being secured to the upper end of one of the other two telescopic elements (34, 36), the said ram (70) being controlled in such a way that the relative displacements of the two rods are substantially equal.

9. Handling device according to Claim 2, characterized in that the said self-propelled vehicle (150) is equipped with wheels (14, 16) connected to the chassis (10) of the vehicle by levers (18, 20) which can pivot about horizontal axes, it being possible for the said levers to adopt a first position in which the vehicle is in a condition for displacement, and a second position in which the chassis (10) of the vehicle is lowered with respect to its condition for displacement.

10. Handling device according to any one of Claims 1 to 9, characterized in that the said assembly forming a beam (100) includes horizontal slideways (102, 104) for guiding the said catching means (110) in terms of translation, the said catching means being suspended from the said slideways, and means (112, 114) for controlling the displacement of the catching means along the slideways.

11. Handling device according to Claim 10, characterized in that the said catching means comprise a saddle (110) interacting with the slideways (102, 104) carrying catching elements (120, 122) and driven in terms of translation by the displacement-control means (112, 114).

12. Handling device according to Claim 11, characterized in that the said saddle (110) further comprises retractable means (129) of locking on the said slideways (102, 104) and ram means (128) equipped with auxiliary catching means (128a) for extracting the said tube bundle, the said saddle being locked on the said slide-ways.

## Patentansprüche

1. Handhabungsvorrichtung für Rohrbündel von Wärmetauschern der Art, die aufweist:
eine auf einem Rad befestigte, bewegliche Bühne (12);
eine vertikale Teleskopsäule (30) mit wenigstens zwei Säulenelementen (32,34);
Mittel (70) zur Erzeugung der jeweiligen vertikalen Bewegung des oder der Teleskopelemente bezüglich des unteren Elements (32) und eine Auszugsanordnung (52) mit einem einen Träger (100) bildenden Element, dadurch gekennzeichnet, daß sie außerdem aufweist;
eine Anordnung zum Rotationsantrieb (38) um die vertikale Achse (XX') der Säule, die ein erstes Teil, das hinsichtlich Rotation bezüglich des oberen Elements (36) der Säule fest ist und ein zweites Teil (42), das hinsichtlich Rotation bezüglich des ersten Teils (40) um die vertikale Achse beweglich ist; und
einen Stützarm (48), dessen eines Ende mit einem zweiten Teil der Anordnung zum Rotationsantrieb verbunden ist, wobei der Arm im wesentlichen horizontal ist; und daß das einen Träger formende Teil mit dem zweiten Ende des Stützarms (48) verbunden ist; wobei die einen Träger bildende Anordnung im wesentlichen horizontal und im wesentlichen orthogonal zu dem Arm ist, Mittel (110) zum Anhängen des Bündels, die von dem Träger geführt und unterhalb von diesem angeordnet sind und Mittel zum Tragen (136, 138) des Bündels nach seinem Auszug, die im wesentlichen an wenigstens einem Ende des Trägers unterhalb von diesem angeordnet sind.

2. Handhabungsvorrichtung nach Anspruch 1, dadurch gekennzeichnet, daß die bewegliche Bühne (12) ein Kraftfahrzeug (150) ist.

3. Handhabungsvorrichtung nach einem der Ansprüche 1 und 2, dadurch gekennzeichnet, daß der Stützarm (48) in der Länge steuerbar ist und Mittel (54) zur Steuerung der Längenabweichungen aufweist.

4. Handhabungsvorrichtung nach einem der Ansprüche 1 bis 3, dadurch gekennzeichnet, daß der erste Teil (40) der Rotationsanordnung (38) mit dem unteren Ende (44) des oberen Säulenelements (36) durch Mittel zur vertikalen Bewegung (46) verbunden ist, um ihn auf wenigstens einem Teil der Länge des Säulenelements zu bewegen.

5. Handhabungsvorrichtung nach einem der Ansprüche 1 bis 4, dadurch gekennzeichnet, daß jedes Säulenelement (32, 34, 36) einen horizontalen rechteckigen Hohlquerschnitt aufweist, und daß die Mittel zum Führen hinsichtlich Translation eines Säulenelements bezüglich des benachbarten Elements wenigstens vier Gleitstücke (82) aufweisen, die in derselben horizontalen Ebene an den Ecken des horizontalen Querschnitts des Säulenelements angeordnet und mit einem der Säulenelemente verbunden sind und mit den Ecken des horizontalen Querschritts des gleitend mit dem ersten Element (32) verbundenen Säulenelements (34) zusammenwirken.

6. Handhabungsvorrichtung nach Anspruch 5, dadurch gekennzeichnet, daß jedes Säulenelement (32, 34, 36) an jedem seiner Enden mit den Gleitstücken (80, 82) ausgestattet ist, wobei die Gleitstücke der oberen Enden außerhalb der Elemente befestigt sind und die Gleitstücke der unteren Enden im Inneren der Säulenelemente befestigt sind.

7. Handhabungsvorrichtung nach einem der Ansprüche 1 bis 6, dadurch gekennzeichnet, daß die Mittel zur Bewegung der Säulenelemente Mittel pro Zylinder (70) aufweisen, die im Inneren von diesen entlang der Achse der Säule angeordnet sind.

8. Handhabungsvorrichtung nach Anspruch 7, dadurch gekennzeichnet, daß die Säule aus drei Teleskopelementen (32, 34, 36) gebildet ist, und daß die Mittel pro Zylinder einen Zylinder (70) mit doppelter Stange aufweisen, wobei der Körper (72) des Zylinders mit dem unteren Säulenelement (32) verbunden ist, wobei jede der Stangen (74, 76) des Zylinders mit dem oberer Enden eines der beiden andere Teleskopelemente (34, 36) verbunden ist, wobei der Zylinder (70) derart gesteuert ist, daß die jeweiligen Bewegungen der beiden Standen im wesentlichen gleich sind.

9. Handhabungsvorrichtung nach Anspruch 2, dadurch gekennzeichnet, daß das Kraftfahrzeug (150) mit Rädern (14, 16) ausgestattet ist, die mit den Rahmen (10) des Fahrzeugs durch Hebel (18, 20) verbunden sind, die um horizontale Achsen schwenken können, wobei die Hebel eine erste Stellung, in der sich das Fahrzeug im. Bewegungszustand befindet und eine zweite Stellung, in der der Rahmen (10) des Fahrzeugs bezüglich seines Bewegungszustands abgesenkt ist, einnahmen können.

10. Handhabungsvorrichtung nach einem der Ansprüche 1 bis 9, dadurch gekennzeichnet, daß das den Träger (100) bildende Element horizontale Gleitschienen (102, 104) zum Führen hinsichtlich Translation der Mittel zum Anhänger (110) wobei die Mittel zum Anhängen an den Gleitschienen angehängt sind, und Mittel (112, 114) zur Steuerung der Bewegung der Mittel zum Anhängen entlang der Gleitchienen aufweist.

11. Handhabungsvorrichtung nach Anspruch 10, dadurch gekennzeichnet, daß die Mittel zum Anhängen einen Wagen (110) aufweisen, der mit den Gleitschienen (102, 104) zusammenwirkt, die die Anhängelemente (120, 122) tragen und hinsichtlich Translation durch die Mittel (112, 114) zur Bewegungssteuerung angetrieben wird.

12. Handhabungsvorrichtung nach Anspruch 11, dadurch gekennzeichnet, daß der Wagen (110) außerdem einziehbare Mittel (129) zum Blockieren auf den Gleitschienen (102, 104) und Mittel pro Zylinder (128) aufweist, die mit Hilfseinhängmitteln (128a) zur Erzeugung des Auszugs des Rohrbündels ausgestattet sind, wobei der wagen auf den Gleitschienen blockiert ist.
